# EUROPÄISCHE PATENTSCHRIFT

(11) **EP 2 883 434 B1**
(45) Veröffentlichungstag und Bekanntmachung des Hinweises auf die Patenterteilung: **27.09.2017**
(21) Anmeldenummer: 14188622.6
(22) Anmeldetag: 13.10.2014
(51) Int. Cl.: A01B 49/06, A01B 63/32

(54) **Bodenbearbeitungsmaschine**
Soil processing machine
Machine de traitement de sol

(30) Priorität: 31.10.2013 DE 202013009669 U; 05.11.2013 DE 202013010041 U
(43) Veröffentlichungstag der Anmeldung: 17.06.2015
(73) Patentinhaber: PÖTTINGER Landtechnik GmbH, 4710 Grieskirchen (AT)
(72) Erfinder: Preimess, Hans-Jörg, 9811 Lendorf (AT); Witzmann, Alexander, 4720 Kallham (AT)
(74) Vertreter: Thoma, Michael

(56) Entgegenhaltungen:
- EP-A1- 0 311 221
- EP-A1- 2 258 157
- DE-A1-102006 034 798
- GB-A- 2 127 662

## Beschreibung

Die vorliegende Erfindung betrifft eine Bodenbearbeitungsmaschine zum Anbau an einen Schlepper, mit einer Bodenbearbeitungs-Baugruppe wie Grubber oder Scheibenegge, die mittels eines Fahrwerks am Boden abstützbar ist, sowie einem Ankoppelgerät wie Sämaschine oder Düngerstreuer, wobei das Ankoppelgerät mittels einer Hubschwenkvorrichtung gegenüber der Bodenbearbeitungsbaugruppe in eine Transport- und/oder Vorgewendestellung aushebbar ist.

Bei Bodenbearbeitungsmaschinen ist es bisweilen hilfreich, verschiedene Bearbeitungsfunktionen unmittelbar hintereinander auszuführen und in einer Maschine zusammenzufassen, so dass mit nur einmaligem Befahren des Felds diese mehreren Funktionen ausgeführt werden können. Entsprechende Kombi-Maschinen bzw. Bodenbearbeitungskombinationen umfassen dabei mehrere Bearbeitungsbaugruppen, die die entsprechenden Bearbeitungsfunktionen ausführen und miteinander verbunden sind, so dass sie als Maschinenbaugruppe an einen Schlepper angebaut werden können. Dabei kann es vorteilhaft sein, eine der Baugruppen, die ein Fahrwerk besitzt bzw. über ein Fahrwerk am Boden abstützbar ist, als Aufsattelrahmen zu verwenden, an dem eine andere Bearbeitungsbaugruppe nach Art eines Aufsattelgeräts aufgesattelt gelagert ist, so dass diese weitere Bearbeitungsbaugruppe bei Bedarf vom Boden ausgehoben werden kann, beispielsweise um im Vorgewende ohne Beeinträchtigung der bearbeiteten Fläche leichter wenden zu können oder im Straßentransport die Maschine besser fahren zu können.

Beispielsweise können solche Bodenbearbeitungsmaschinen als Bodenbearbeitungsbaugruppe einen Grubber oder eine Scheibenegge umfassen, die durch ein Fahrwerk beispielsweise in Form einer Packerradwalze am Boden abstützbar ist. Die Werkzeuge der Bodenbearbeitungsbaugruppe können an einem Rahmen aufgehängt sein, der über das besagte Fahrwerk am Boden abstützbar ist und gleichzeitig den Aufsattelrahmen für ein die Bodenbearbeitungsbaugruppe folgerichtig ergänzendes Ankoppelgerät bilden kann, das an dem genannten Aufsattelrahmen oder auch direkt an dem genannten Fahrwerk aushebbar abgestützt sein kann, wobei das genannte Ankoppelgerät insbesondere eine Sämaschine und/oder ein Düngemittelausbringer und/oder ein anderes Ausbringgerät sein oder aber auch ein weiteres Bodenbearbeitungsgerät oder sonstiges Folgegerät sein kann, mit dem auf einem Feld auszubringendes Gut wie Saatgut, Düngegut, Pflanzenschutzmittel etc. ausgebracht werden können. Solche Sämaschinen oder Düngemittelausbringer besitzen dabei oft Schare, mittels derer in den vorbereiteten Boden eine Ausbringfurche für das auszubringende Gut eingebracht wird, wobei diese Ausbringfurchen durch ihren Bodeneingriff im Vorgewende und auch beim Straßentransport stören, so dass es vorteilhaft ist, das Ankoppelgerät für das Vorgewende bzw. im Straßentransport ausheben zu können.

Beim Ausheben des Ankoppelgeräts, das üblicherweise mittels einer Hubschwenkvorrichtung beispielsweise in Form einer Lenkeranordnung zusammen mit einem Hubaktor erfolgen kann, kommt es bisweilen zu einem Verkippen des Ankoppelgeräts, das üblicherweise schräg nach vorne über den Aufsattelrahmen geschwenkt wird, der die vorauslaufende Bodenbearbeitungsbaugruppe trägt. Je nach Ausbildung des Ankoppelgeräts kann es hierbei jedoch zu verschiedenen Problemen kommen. Beispielsweise kann es bei einem vollständig gefüllten Saatgut- oder Düngertank zu einem Überlaufen des Saatguts bzw. Düngemittels kommen. Je nach Ausbildung der Dosier- bzw. Verteilorgane kann es auch zu einem ungewollten Einleiten von Saatgut in Verteilerleitungen oder dergleichen kommen, was dann bei erneutem Anstellen der Maschine zu einer ungleichmäßigen Ausbringung führen kann.

Eine als Kombigerät ausgeführte Bodenbearbeitungsmaschine der genannten Art zeigt beispielsweise die DE 10 2006 034 798 A1, wobei hier die auf einem Aufsattelrahmen, der mit einem Fahrwerk am Boden abgestützt ist, aufgesattelte Sämaschinen über eine Lenkeranordnung ausgehoben und nach vorne über das Fahrwerk gekippt werden kann.

Weitere Bodenbearbeitungsmaschinen mit aushebbaren Ankoppelgeräten sind aus den Schriften EP 2 258 157, EP 0 311 221 A1 oder DE 10 2006 034 798 A1 bekannt.

Der vorliegenden Erfindung liegt die Aufgabe zugrunde, eine verbesserte Bodenbearbeitungsmaschine der genannten Art zu schaffen, die Nachteile des Standes der Technik vermeidet und Letzteren in vorteilhafter Weise weiterbildet. Insbesondere soll ein günstiges, krafteffizientes Ausheben des Ankoppelgeräts ermöglicht werden, ohne hierbei Probleme wie ein Überlaufen eines Speichertanks in Kauf nehmen zu müssen.

Erfindungsgemäß wird die genannte Aufgabe durch eine Bodenbearbeitungsmaschine gemäß Anspruch 1 gelöst. Bevorzugte Ausgestaltungen der Erfindung sind Gegenstand der abhängigen Ansprüche.

Es wird also vorgeschlagen, beim Ausheben des Ankoppelgeräts gegenüber der durch ein Fahrwerk abstützbaren Bodenbearbeitungsbaugruppe die Winkellage des Ankoppelgeräts gezielt zu steuern und ein zu starkes Verkippen zu vermeiden. Erfindungsgemäß besitzt die Hubschwenkvorrichtung eine Winkelsteuervorrichtung, die das Ankoppelgerät beim Ausheben in die Vorgewende- und/oder Transportstellung in einer im Wesentlichen horizontalen Ausrichtung hält. Mit der genannten horizontalen Ausrichtung ist dabei die Gerätestellung gemeint, die das Ankoppelgerät bestimmungsgemäß in seiner abgesenkten Arbeitsstellung einnimmt. Ist ein Saatgutspeicher oder ein anderer Betriebsstoffspeicher vorhanden, kann die genannte horizontale Ausrichtung eine Winkellage mit im Wesentlichen gleichmäßiger Befüllung des Speichertanks meinen, wobei dies jedoch je nach Ausbildung des Speichertanks auch variieren kann. Die Winkelsteuervorrichtung vermeidet bestimmungsgemäß stärkere Verkippungen und Winkeländerungen des Ankoppelgeräts beim Aushub in die Vorgewende- bzw. Transportstellung, so dass auch bei vollständig befülltem Speicher kein Überlaufen eintritt.

Die genannte Winkelsteuervorrichtung kann je nach Ausbildung der Hubschwenkvorrichtung verschiedene Ausgestaltungen besitzen. Vorteilhafterweise kann die Hubschwenkvorrichtung eine Lenkeranordnung mit zumindest einem Oberlenker und zumindest einem Unterlenker zum Anlenken des Ankoppelgeräts an die Bodenbearbeitungsbaugruppe umfassen, wobei die genannten Ober- und Unterlenker in an sich bekannter Weise einerseits an der Bodenbearbeitungsbaugruppe bzw. eine diese tragenden Rahmen und/oder an einem Fahrwerksteil gelenkig angelenkt und andererseits an dem Ankoppelgerät, beispielsweise dessen Rahmen oder Korpusteilen gelenkig angelenkt sein können, insbesondere um liegende Schwenkachsen quer zur Fahrtrichtung, so dass das Ankoppelgerät unter Verschwenken der Lenkeranordnung schräg nach oben ausgehoben werden kann.

Bei Vorsehen einer solchen Lenkeranordnung kann die Winkelsteuervorrichtung vorteilhafterweise zumindest einen Steueraktor umfassen, mittels dessen die Länge zumindest eines der Lenker zwischen dessen Anlenkpunkten verändert und/oder einer der Anlenkpunkte des Lenkers verschoben werden kann. Da die genannten Ober- und Unterlenker im Zusammenspiel mit ihren gelenkigen Anlenkpunkten die Hubschwenkbewegung des Ankoppelgeräts gegenüber der Bodenbearbeitungsbaugruppe beim Ausheben in die Vorgewende- und/oder Transportstellung vorgeben, kann durch Veränderung der Länge eines Lenkers und/oder Verschieben eines Anlenkpunkts eines Lenkers beim Ausheben die Winkelstellung des an den Lenkern angelenkten Ankoppelgeräts gesteuert werden.

Der Steueraktor kann dabei grundsätzlich in verschiedener Art und Weise angesteuert bzw. betätigt werden. Beispielsweise kann mittels eines Neigungssensors die Neigung des Anbaugeräts - ggf. auch mittelbar über eine Messung der Winkelstellung eines der Lenker - gemessen und der Steueraktor in Abhängigkeit der gemessenen Neigungsstellung des Ankoppelgeräts angesteuert werden, um die Neigung des Ankoppelgeräts in einem vorbestimmten Bereich zu halten bzw. auf einem vorbestimmten Wert zu halten.

Insbesondere kann der genannte Steueraktor in Weiterbildung der Erfindung in Abhängigkeit der Betätigung und/oder eines Stellwegs eines Hubaktors angesteuert werden, mittels dessen das Ankoppelgerät und/oder die Bodenbearbeitungs-Baugruppe ausgehoben wird. Ein solcher Hubaktor kann beispielsweise zwischen der Bodenbearbeitungsbaugruppe oder deren Aufsattelrahmen oder dem Fahrwerk einerseits und dem Ankoppelgerät andererseits vorgesehen sein, oder auch beispielsweise am Unterlenker angreifen, um das Anbaugerät in die Vorgewende- bzw. Transportstellung auszuheben. Alternativ oder zusätzlich kann besagter Hubaktor auch dazu dienen, das Fahrwerk abzusenken, um hierdurch das Ankoppelgerät und die Bodenbearbeitungs-Baugruppe in die Vorgewende- und/oder Transportstellung anzuheben.

Der Steueraktor kann dabei in Abhängigkeit des Stellwegs oder einer damit verknüpften Stellgröße des Hubaktors angesteuert werden, wobei vorteilhafterweise die Verknüpfung bzw. Ansteuerung derart beschaffen sein kann, dass der Steueraktor proportional zum Stellweg des Hubaktors verstellt wird. Je nach Geometrie der Lenkeranordnung, also der Unter- und Oberlenker sowie deren Anlenkpunkte und Beabstandungen voneinander kann jedoch grundsätzlich auch eine nicht proportionale Verknüpfung zwischen dem Stellweg des Hubaktors und dem Steueraktor vorgesehen sein, um beim Ausheben des Ankoppelgeräts in die Vorgewende- und/oder Transportstellung das Ankoppelgerät in der gewünschten Winkellage zu halten.

In vorteilhafter Weiterbildung der Erfindung können der genannte Hubaktor und der Stellaktor jeweils als Druckmittelzylinder, insbesondere Hydraulikzylinder, ausgebildet sein, wobei der Hubaktor und der Stellaktor in einer Master-Slave-Anordnung miteinander verbunden sein können, so dass ein Verstellen des einen Aktors zu einem entsprechenden Verstellen des anderen Aktors führt.

Insbesondere kann der Hubaktor dabei den Master-Zylinder bilden, dessen Druckmittelverdrängung als Stellgröße für den Stellaktor der Winkelsteuervorrichtung dient. Je nach benötigtem Übersetzungs/Untersetzungsverhältnis und den benötigten Zylinderquerschnitten können der Hubaktor und der Stellaktor dabei unmittelbar miteinander verbunden sein dergestalt, dass aus dem Hubaktor verdrängtes Druckmittel in den Steueraktor gedrückt wird, um den Steueraktor zu betätigen. Alternativ zu einer solchen direkten Verschaltung wäre es jedoch ebenfalls möglich, einen oder mehrere Zylinder zwischenzuschalten, so dass das aus dem Hubaktor verdrängte Druckfluid zunächst in einen anderen Zylinder strömt und diesen betätigt, so dass das aus diesem zwischengeschalteten Zylinder aus einer anderen Druckkammer verdrängte Druckmittel in den Steueraktor oder ggf. nochmals einen weiteren Zwischenzylinder gedrückt werden kann, um dort eine weitere Stellbewegung hervorzurufen. Mittels eines solchen Zwischen- bzw. Ausgleichzylinder können verschiedene Stellwegsverhältnisse realisiert werden, da in einem solchen Zwischenzylinder in einfacher Weise unterschiedlich große Druckkammern vorgesehen werden können.

Dabei muss jedoch nicht zwangsweise der Hubaktor den Masterzylinder der Master-Slave-Anordnung bilden. Grundsätzlich wäre es auch denkbar, eine umgekehrte Konstellation vorzusehen, in der der Steuerzylinder den Masterzylinder bildet, dessen Verstellung in eine Zwangsverstellung des Hubzylinders umgesetzt wird. Aufgrund der benötigten Kraftverhältnisse kann es jedoch vorteilhaft sein, den genannten Hubaktor als Masterzylinder zu verwenden.

Der genannte Steueraktor kann in vorteilhafter Weiterbildung der Erfindung in den Oberlenker der Lenkeranordnung integriert sein, mit der das Ankoppelgerät an der Bodenbearbeitungsbaugruppe bzw. deren Tragrahmen und/oder dessen Fahrwerk angekuppelt ist, um den genannten Oberlenker in seiner Länge, d.h. seiner Erstreckung zwischen seinen beiden Anlenkpunkten zu verändern, also kürzer und/oder länger machen zu können. Alternativ oder zusätzlich könnte ein Steueraktor auch in einen der Unterlenker integriert sein, um diesen Unterlenker in der Länge verstellen zu können. Je nach Ausbildung der Lenkeranordnung können jedoch in dem Unterlenker beim Ausheben des Ankoppelgeräts in die Vorgewende- und/oder Transportstellung die größeren Kräfte als im Oberlenker wirken, beispielsweise wenn die Unterlenker in der angehobenen Transportstellung aufrecht stehen und einen Großteil des Gewichts der Ankoppel-Gerätschaft tragen. Insofern kann es vorteilhaft sein, den genannten Steuerzylinder dem Oberlenker zuzuordnen, da dann die Winkelstellung mit relativ kleinen Kräften gesteuert werden kann.

Alternativ zur genannten Integration des Steueraktors in den Oberlenker kann der Steuerzylinder auch dazu vorgesehen sein, einen Anlenkpunkt, beispielsweise den Anlenkpunkt am Aufsattelrahmen zu verschieben, um auch ohne Längenveränderung des Oberlenkers - die gleichwohl zusätzlich vorgesehen sein kann - eine Steuerung der Winkellage des Ankoppelgeräts zu erreichen. Alternativ oder zusätzlich hierzu ist es auch möglich, einen Steuerzylinder zum Verschieben eines der Anlenkpunkte eines der Unterlenker vorzusehen, um in entsprechender Weise die Winkellage des Ankoppelgeräts steuern zu können.

Um beim Anheben des Ankoppelgeräts günstige Hebelverhältnisse zu haben und das Ankoppelgerät ein Stück weit über das Fahrwerk bzw. den Schwerpunkt des Ankoppelgeräts näher an das Fahrwerk zu verbringen, wenn das Ankoppelgerät in die Vorgewende- und/oder Transportstellung verbracht wird, kann es vorteilhaft sein, den zumindest einen Oberlenker deutlich länger auszubilden als den zumindest einen Unterlenker und/oder einen relativ kurzen Unterlenker vorzusehen, der bei begrenzter Höhe des Aushubs eine relativ große Winkelverstellung, beispielsweise eine 90°-Verstellung erfährt, so dass der axiale Versatz des Ankoppelgeräts in Längsrichtung der Bodenbearbeitungsmaschine beim Ausheben in die Vorgewende- bzw. Transportstellung relativ groß ist. Zudem können durch einen solchermaßen relativ kurzen Unterlenker günstige Hebelverhältnisse für den Hubaktor erzeugt werden. Beispielsweise kann der Unterlenker weniger als halb so lang sein wie der Oberlenker.

In Weiterbildung der Erfindung kann der Oberlenker sich über die Bodenbearbeitungsbaugruppe hinweg erstrecken und das in Fahrtrichtung hinter der Bodenbearbeitungsbaugruppe aufgesattelte Ankoppelgerät mit einem vor der Bodenbearbeitungsbaugruppe liegenden Anbaubock zu verbinden, mittels dessen die Maschine an einem Schlepper angebaut werden kann.

Das Fahrwerk, mittels dessen die Bodenbearbeitungsbaugruppe wie Grubber oder Scheibenegge am Boden abstützbar ist, kann grundsätzlich verschieden ausgebildet sein, beispielsweise ein reines Straßenfahrwerk bilden. In vorteilhafter Weiterbildung der Erfindung allerdings kann das genannte Fahrwerk von einer der Bodenbearbeitungsbaugruppe zugeordneten Walze, insbesondere Packerradwalze gebildet sein, die einerseits bei der Bodenbearbeitung eine bodenverdichtende Funktion und/oder eine höheneinstellende Funktion erfüllt und andererseits beim Transport als Fahrwerk dient, auf dem auch dann das ausgehobene Ankoppelgerät abgestützt wird.

Die Erfindung wird nachfolgend anhand eines bevorzugten Ausführungsbeispiels und zugehöriger Zeichnungen näher erläutert. In den Zeichnungen zeigen:
- Fig. 1:: eine schematische Seitenansicht der Bodenbearbeitungsmaschine mit aufgesattelter Sämaschine nach einer vorteilhaften Ausführung der Erfindung, wobei die Sämaschine in abgesenkter Arbeitsstellung gezeigt ist,
- Fig. 2:: eine schematische Seitenansicht der Bodenbearbeitungsmaschine aus Fig. 1, wobei die Sämaschine in einer ausgehobenen Vorgewende- und/oder Transportstellung gezeigt ist, und

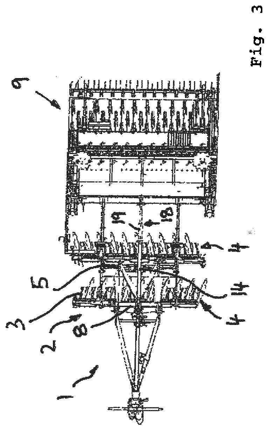

- Fig. 3:: eine Draufsicht auf die Bodenbearbeitungsmaschine aus den Figuren 1 und 2.

Wie die Figuren zeigen, kann die Bodenbearbeitungsmaschine 1 als Bodenbearbeitungs-Baugruppe eine Scheibenegge 3 umfassen, die an einem Tragrahmen 4 aufgehängt ist. Die Scheibenegge 3 kann dabei beispielsweise zwei Scheibenreihen 4 umfassen, die hintereinander angeordnet und zueinander versetzt bzw. zu unterschiedlichen Seiten hin verkippte Scheiben umfassen und jeweils über Scheibentragarme an Querträgern aufgehängt sein können, an denen die Scheibentragarme elastisch nachgiebig schwenkbar gelagert sein und von denen sich die Scheibentragarme schräg nach unten hinten erstrecken können.

An dem Tragrahmen 5 kann ferner ein Fahrwerk 6 beispielsweise in Form einer Packerradwalze 7 befestigt sein, mittels dessen die Scheibenegge 3 gegenüber dem Boden abstützbar ist. Das genannte Fahrwerk 6 kann dabei vorteilhafterweise gegenüber den Werkzeugen der Scheibenegge 3 und/oder gegenüber dem Tragrahmen 5 höhenverstellbar sein, beispielsweise über eine Schwenkgelenksaufhängung, um die Arbeitstiefe der Bodenbearbeitungs-Baugruppe 2 einstellen zu können.

Der genannte Tragrahmen 5 kann einen Anbaubock 8 umfassen bzw. daran befestigt sein, wobei der genannte Anbaubock 6 über eine Deichsel oder dergleichen an einem nicht eigens gezeigten Schlepper angelenkt werden kann.

Zusätzlich zu der genannten Bodenbearbeitungs-Baugruppe 2 umfasst die Bodenbearbeitungsmaschine 1 ein Ankoppelgerät 9, das auf dem genannten Tragrahmen 5 aufgesattelt sein kann, wie noch näher erläutert wird. Das genannte Ankoppelgerät 9 kann insbesondere eine Sämaschine sein, die einen Saatguttank 10 umfassen kann, aus dem Ausbringelemente beispielsweise in Form von Säscharen 11 mit Saatgut versorgt werden können.

Das Ankoppelgerät 9 ist mit seinen Arbeitswerkzeugen in Arbeitsstellung hinter der Bodenbearbeitungs-Baugruppe 2, insbesondere auch hinter dem Fahrwerk 6 angeordnet, wobei sich der genannte Saatguttank 10 vorteilhafterweise über dem Fahrwerk 6 bzw. zumindest teilweise mit dem Fahrwerk 6 überdeckend angeordnet sein kann, um günstige Abstützverhältnisse zu erzielen.

Insbesondere kann das genannte Ankoppelgerät 9 über eine Lenkeranordnung 12 an dem Tragrahmen 5 der Bodenbearbeitungs-Baugruppe 2 angelenkt sein, wobei die genannte Lenkeranordnung 12 zwei Unterlenker 13 und einen Oberlenker 14 umfassen kann, die jeweils um liegende, sich quer zur Fahrtrichtung 15 erstreckende Gelenksachsen am Ankoppelgerät 9 einerseits und am Tragrahmen 5 bzw. einem anderen Trägerteil der Bodenbearbeitungs-Baugruppe 2 oder dem Fahrwerk 6 andererseits angelenkt sein können. Vorteilhafterweise kann der Oberlenker 14 einerseits an dem Anbaubock 8 angelenkt sein, sich über die Bodenbearbeitungs-Baugruppe 2 hinweg nach hinten erstrecken und an einem Rahmenteil des Anbaugeräts 9 beispielsweise im Bereich des Saatguttanks 10 angelenkt sein, wobei sich der genannte Oberlenker 14 - grob gesprochen - näherungsweise horizontal bzw. liegend erstrecken kann.

Die Unterlenker 13 können an einem Tragrahmenabschnitt im Bereich des Fahrwerks 6 angelenkt sein und sich schräg nach hinten zu einem Rahmenteil des Ankoppelgeräts 9 erstrecken, wobei der Oberlenker 14 deutlich länger als die Unterlenker 13 ausgebildet sein kann. Die Länge des Oberlenkers 14 kann ein Vielfaches der Länge des Unterlenkers 13 betragen. Der am Tragrahmen 5 der Bodenbearbeitungs-Baugruppe 2 angelenkte Endabschnitt des Unterlenkers 13 kann in Fahrtrichtung betrachtet etwa auf Höhe des Anlenkpunktes des Oberlenkers 14 am Ankoppelgerät 9 liegen. Je nach Aufhängungsgeometrie können jedoch auch andere Anlenkpunkte und Lenkerlängen gewählt werden.

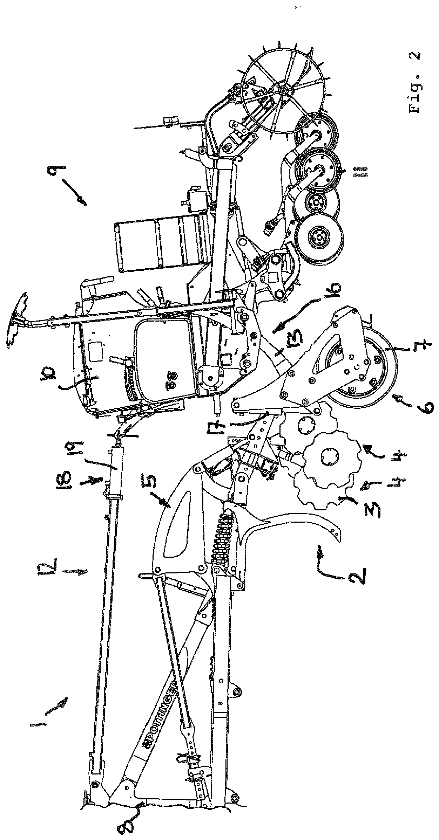

Mittels einer Hubschwenkvorrichtung 16, die einen nur angedeuteten Hubaktor 17 umfassen kann, der sich beispielsweise am Fahrwerk 6 abstützen kann und am Ankoppelgerät 9 an geeigneter Stelle angelenkt ist, kann das Ankoppelgerät 9 gegenüber der Bodenbearbeitungsbaugruppe 2 in eine Vorgewende- und/oder Transportstellung ausgehoben werden. In der genannten ausgehobenen Vorgewende- und/oder Transportstellung sind die Bodenbearbeitungswerkzeuge des Ankoppelgeräts 9 vom Boden außer Eingriff und zur Erlangung von Bodenfreiheit ein Stück weit oberhalb des Bodens, wie dies Fig. 2 zeigt, während in der abgesenkten Arbeitsstellung das Ankoppelgerät 9 mit seinen Bodenbearbeitungswerkzeugen mit dem Boden in Eingriff steht. Insbesondere kann die Arbeitstiefe der Bodenbearbeitungswerkzeuge des Ankoppelgeräts 9 in der Arbeitsstellung unterhalb der Aufstandsfläche des Fahrwerks 6 liegen, während die Unterseite der genannten Arbeitswerkzeuge des Ankoppelgeräts 9 in der Vorgewende- und/oder Transportstellung oberhalb der Aufstandsfläche des Fahrwerks 6 liegen.

Um beim Ausheben des Ankoppelgeräts 9 ein Verkippen des Ankoppelgeräts 9 zu vermeiden bzw. das Ankoppelgerät 9, insbesondere dessen Saatguttank 10, näherungsweise horizontal oder in unveränderter Winkelstellung zu halten, kann eine hierfür vorgesehene Winkelsteuervorrichtung 18 einen Steueraktor 19 umfassen, der in den Oberlenker 14 integriert ist und die Länge des Oberlenkers 14 verändern kann. Der genannte Steueraktor 19 kann insbesondere ein Druckmittelzylinder sein, mittels dessen der Oberlenker 14 teleskopartig ein- und ausgefahren bzw. verlängert und verkürzt werden kann.

Der genannte Steueraktor 19 kann dabei vorteilhafterweise in einer Master-Slave-Anordnung mit dem Hubaktor 17 der Hubschwenkvorrichtung 16 verbunden sein, so dass eine Stellbewegung des Hubaktors 17 in eine Folge-Stellbewegung des Steueraktors 19 umgesetzt wird.

Obwohl die Lenkeranordnung 12 umfassend die Ober- und Unterlenker 14 und 13 keine Parallelogrammlenkerführung bildet, kann die Sämaschine bzw. das Ankoppelgerät 9 beim Ausheben dennoch in einer näherungsweise gleichbleibenden Winkellage geführt werden. Vorteilhafterweise kann die Lenkeranordnung 12 derart beschaffen sein, dass das Ankoppelgerät 9 beim Ausheben in die Vorgewende- bzw. Transportstellung nach oben und nach vorne fährt, so dass der Schwerpunkt des Ankoppelgeräts nicht nur weiter nach oben, sondern auch ein Stück weiter nach vorne und damit näher an dem bzw. über dem Fahrwerk 6 zu liegen kommt, wodurch sich das Fahrverhalten der Bodenbearbeitungsmaschine 1 in der Vorgewende- bzw. Transportstellung verbessert.

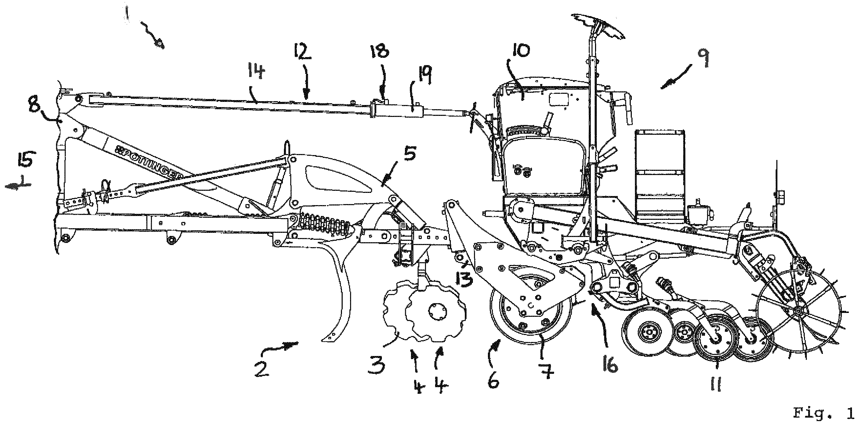

Wie ein Vergleich der Figuren 1 und 2 zeigt, kann beim Ausheben des Ankoppelgeräts 9 auch das Fahrwerk 6 gegenüber der Bodenbearbeitungs-Baugruppe 2 abgesenkt werden, um auch die Werkzeuge der Bodenbearbeitungs-Baugruppe 2 außer Bodeneingriff zu bringen. Beispielsweise kann der das Fahrwerk 6 lagernde Tragrahmenteil des Tragrahmens 5 gegenüber dem die Scheibenegge 3 lagernden Tragrahmenabschnitt schwenkbar gelagert sein und durch einen Stellaktor 20 verschwenkt werden, um die Packerradwalze 7 abzusenken, was gleichzeitig auch die Bodenbearbeitungs-Baugruppe 2 und das Ankoppelgerät 9 ein Stück weit aushebt. Je nach Konfiguration der Lenkeranordnung 12 und der Absenkbarkeit des Fahrwerks 6 kann auch dieser Stellaktor 20 den Hubaktor 17 der Hubschwenkvorrichtung 16 bilden, so dass kein eigener Hubaktor zum Anheben des Ankoppelgeräts 9 alleine gegenüber dem Tragrahmen 5 notwendig ist.

## Patentansprüche

1. Bodenbearbeitungsmaschine zum Anbau an einen Schlepper, mit einer Bodenbearbeitungs-Baugruppe (2) wie Grubber oder Scheibenegge (3), die mittels eines Fahrwerks (6) am Boden abstützbar ist, sowie einem Ankoppelgerät (9) wie Sämaschine oder Düngemittelausbringer, wobei das Fahrwerk (6) gegenüber der Bodenbearbeitungs-Baugruppe (2) höhenverstellbar ist, derart, dass durch Höhenverstellung des Fahrwerks (6) eine Arbeitstiefeneinstellung der Bodenbearbeitungs-Baugruppe (2) vorsehbar ist und die Bodenbearbeitungs-Baugruppe (2) in eine Vorgewende- und/oder Transportstellung aushebbar ist, wobei das Ankoppelgerät (9) mittels einer Hubschwenkvorrichtung (16) gegenüber der Bodenbearbeitungs-Baugruppe (2) und gegenüber dem Fahrwerk (6) in eine Transport- und/oder Vorgewendestellung aushebbar ist, **dadurch gekennzeichnet, dass** die Hubschwenkvorrichtung (16) eine Winkelsteuervorrichtung (18), die das Ankoppelgerät (9) beim Anheben in die Vorgewende- und/oder Transportstellung in einer im Wesentlichen horizontalen Ausrichtung und/oder in einer im Wesentlichen unveränderten Winkelstellung hält, aufweist.

2. Bodenbearbeitungsmaschine nach dem vorhergehenden Anspruch, wobei die Hubschwenkvorrichtung (16) eine Lenkeranordnung (12) mit zumindest einem Oberlenker (14) und zumindest einem Unterlenker (13) zum Anlenken des Ankoppelgeräts (9) an die Bodenbearbeitungs-Baugruppe (2) und/oder an einen Tragrahmen (5) der Bodenbearbeitungs-Baugruppe (2) und/oder das Fahrwerk (6) umfasst, wobei die Winkelsteuervorrichtung (18) einen Steueraktor (19) zum Verstellen der Länge und/oder zum Verschieben des Anlenkpunkts des Oberlenkers und/oder des Unterlenkers beim Ausheben des Ankoppelgeräts (9) umfasst.

3. Bodenbearbeitungsmaschine nach dem vorhergehenden Anspruch, wobei die Hubschwenkvorrichtung (16) einen Hubaktor (17) zum Verschwenken der Lenkeranordnung (12) aufweist, wobei der Steueraktor (20) der Winkelsteuervorrichtung (18) mit dem Hubaktor (17) steuerungstechnisch gekoppelt ist derart, dass der Steueraktor (19) der Winkelsteuervorrichtung (18) in Abhängigkeit einer Betätigung und/oder eines Stellwegs des Hubaktors (17) betätigbar ist.

4. Bodenbearbeitungsmaschine nach dem vorhergehenden Anspruch, wobei der Hubaktor (17) und der Steueraktor (19) jeweils als Druckmittelzylinder ausgebildet und in einer Master-Slave-Anordnung miteinander verbunden sind, wobei vorzugsweise der Hubaktor (17) den Master-Druckmittelzylinder bildet, dessen Druckmittelverdrängung als Stellgröße für den Steueraktor der Winkelsteuervorrichtung (18) dient.

5. Bodenbearbeitungsmaschine nach einem der vorhergehenden Ansprüche, wobei der Steueraktor (19) der Winkelsteuervorrichtung (18) in den Oberlenker (14) integriert ist derart, dass durch den Steueraktor (19) die Länge des Oberlenkers (14) zwischen den Oberlenkeranlenkpunkten veränderbar ist.

6. Bodenbearbeitungsmaschine nach einem der vorhergehenden Ansprüche, wobei der Hubaktor (17) der Hubschwenkvorrichtung (16) dem zumindest einen Unterlenker (13) zugeordnet ist und/oder zwischen einem Rahmenteil der Bodenbearbeitungs-Baugruppe (2) und einem Korpus- oder Rahmenteil des Ankoppelgeräts (9) angeordnet ist.

7. Bodenbearbeitungsmaschine nach einem der vorhergehenden Ansprüche, wobei der Oberlenker (14) eine größere, vorzugsweise mehr als doppelt so große, Länge als der Unterlenker (14) besitzt.

8. Bodenbearbeitungsmaschine nach einem der vorhergehenden Ansprüche, wobei der Oberlenker (14) sich über die Bodenbearbeitungs-Baugruppe hinweg erstreckt und/oder an einem Anbaubock (8), mittels dessen die Bodenbearbeitungs-Baugruppe (2) an den Schlepper anbaubar ist, angelenkt ist.

9. Bodenbearbeitungsmaschine nach einem der vorhergehenden Ansprüche, wobei das Fahrwerk (6) der Bodenbearbeitungs-Baugruppe (2) eine Walze, insbesondere Packerradwalze (7), umfasst, die Bodenbearbeitungswerkzeugen der Bodenbearbeitungs-Baugruppe (2) nachlaufend angeordnet ist.

10. Bodenbearbeitungsmaschine nach einem der vorhergehenden Ansprüche, wobei das Ankoppelgerät (9) der Bodenbearbeitungs-Baugruppe (2) nachlaufend angeordnet ist und ein auf die Bodenbearbeitungs-Baugruppe (2) aufsattelbares Aufsattelgerät bildet.

## Claims

1. A tilling machine for mounting on a tractor, having a tilling assembly (2) such as a cultivator or disc harrow (3) which may be supported on the earth by means of a chassis (6), and having a coupling device (9) such as a sowing machine or manure spreader, wherein the chassis (6) is vertically adjustable in relation to the tilling assembly (2) such that by vertically adjusting the chassis (6) an adjustment may be made to the working depth of the tilling assembly (2) and the tilling assembly (2) may be raised into a headland and/or transport position, wherein the coupling device (9) may be raised, by means of a lifting and pivoting device (16), into a transport and/or headland position in relation to the tilling assembly (2) and in relation to the chassis (6), **characterised in that** the lifting and pivoting device (16) has an angle control device (18) that keeps the coupling device (9) in a substantially horizontal orientation, and/or in a substantially unchanged angular position, when it is raised into the headland and/or transport position.

2. A tilling machine according to the preceding claim, in which the lifting and pivoting device (16) includes a linking arrangement (12) having at least one upper link bar (14) and at least one lower link bar (13) for linking the coupling device (9) to the tilling assembly (2) and/or to a support frame (5) of the tilling assembly (2) and/or to the chassis (6), wherein the angle control device (18) includes a control actuator (19) for varying the length and/or displacing the link point of the upper link bar and/or the lower link bar when the coupling device (9) is raised.

3. A tilling machine according to the preceding claim, in which the lifting and pivoting device (16) has a lift actuator (17) for pivoting the linking arrangement (12), wherein the control actuator (20) of the angle control device (18) is coupled by control engineering to the lift actuator (17) such that the control actuator (19) of the angle control device (18) may be actuated in dependence on the actuation and/or actuating stroke of the lift actuator (17).

4. A tilling machine according to the preceding claim, in which the lift actuator (17) and the control actuator (19) each take the form of pressurised-medium cylinders and are connected to one another in a master/slave arrangement, wherein preferably the lift actuator (17) forms the master pressurised-medium cylinder whereof the displacement of pressurised medium serves as the control variable for the control actuator of the angle control device (18).

5. A tilling machine according to one of the preceding claims, in which the control actuator (19) of the angle control device (18) is integrated into the upper link bar (14) such that the length of the upper link bar (14) can be varied between the upper link bar link points by the control actuator (19).

6. A tilling machine according to one of the preceding claims, in which the lift actuator (17) of the lifting and pivoting device (16) is associated with the at least one lower link bar (13) and/or is arranged between a frame part of the tilling assembly (2) and a carcass or frame part of the coupling device (9).

7. A tilling machine according to one of the preceding claims, in which the upper link bar (14) has a greater length than the lower link bar (14), preferably being more than twice as great.

8. A tilling machine according to one of the preceding claims, in which the upper link bar (14) extends beyond the tilling assembly and/or is linked to a headstock (8) by means of which the tilling assembly (2) can be mounted on the tractor.

9. A tilling machine according to one of the preceding claims, in which the chassis (6) of the tilling assembly (2) includes a roller, in particular a packer roller (7), that is arranged to follow the tilling implements of the tilling assembly (2).

10. A tilling machine according to one of the preceding claims, in which the coupling device (9) is arranged to follow the tilling assembly (2) and forms a semi-mounted device that can be mounted, in semi-mounted manner, on the tilling assembly (2).

## Revendications

1. Machine de travail du sol destinée à être montée sur un tracteur, comprenant un sous-groupe de travail du sol (2), tel que cultivateur ou herse à disques (3), qui peut être soutenue au sol au moyen d'un châssis (6), et comprenant un appareil d'accouplement (9), tel que semeuse ou distributeur d'engrais, le châssis (6) étant réglable en hauteur par rapport au sous-groupe de travail du sol (2) de manière à ce que par le réglage en hauteur du châssis (6), un réglage de profondeur de travail du sous-groupe de travail du sol (2) soit prévisible et que le sous-groupe de travail du sol (2) puisse être levé en une position de bordure de champ et/ou de transport, l'appareil d'accouplement (9) pouvant être levé en une position de bordure de champ et/ou de transport par rapport au sous-groupe de travail du sol (2) et par rapport au châssis (6) au moyen d'un dispositif de levage-pivotement (16), **caractérisée en ce que** le dispositif de levage-pivotement (16) présente un dispositif de commande d'angle (18) qui maintient l'appareil d'accouplement (9) dans une orientation essentiellement horizontale et/ou dans une position angulaire essentiellement inchangée lors du levage dans la position de bordure de champ et/ou dans la position de transport.

2. Machine de travail du sol selon la revendication précédente, le dispositif de levage-pivotement (16) comprenant un agencement de bielles (12) muni d'au moins une bielle supérieure (14) et d'au moins une bielle inférieure (13) pour le guidage de l'appareil d'accouplement (9) sur le sous-groupe de travail du sol (9) et/ou sur un cadre de support (5) du sous-groupe de travail du sol (2) et/ou sur le châssis (6), le dispositif de commande d'angle (18) comprenant un actionneur de commande (19) destiné à régler la longueur et/ou à déplacer le point d'articulation de la bielle supérieure et/ou de la bielle inférieure lors du levage de l'appareil d'accouplement (9).

3. Machine de travail du sol selon la revendication précédente, le dispositif de levage-pivotement (16) présentant un actionneur de levage (17) destiné à faire pivoter l'agencement de bielles (12), l'actionneur de commande (20) du dispositif de commande d'angle (18) étant couplé à l'actionneur de levage (17) du point de vue de la technique de commande, de manière à ce que l'actionneur de commande (19) du dispositif de commande d'angle (18) soit actionnable en fonction d'un actionnement et/ou d'une course de réglage de l'actionneur de levage (17).

4. Machine de travail du sol selon la revendication précédente, l'actionneur de levage (17) et l'actionneur de commande (19) étant respectivement réalisés comme vérin à fluide sous pression et étant reliés entre eux dans un agencement maître-esclave, l'actionneur de levage (17) formant de préférence le vérin maître à fluide sous pression, dont le déplacement du moyen de pression sert de grandeur de réglage pour l'actionneur de commande du dispositif de commande d'angle (18).

5. Machine de travail du sol selon l'une quelconque des revendications précédentes, l'actionneur de commande (19) du dispositif de commande d'angle (18) étant intégré dans la bielle supérieure (14) de manière à ce que la longueur de la bielle supérieure (14) entre les points d'articulation de la bielle supérieure soit modifiable par l'actionneur de commande (19).

6. Machine de travail du sol selon l'une quelconque des revendications précédentes, l'actionneur de levage (17) du dispositif de levage-pivotement (16) étant associé à au moins une bielle inférieure(13) et/ou étant disposé entre une partie de cadre du sous-groupe de travail du sol (2) et une partie de corps ou de cadre de l'appareil d'accouplement (9).

7. Machine de travail du sol selon l'une quelconque des revendications précédentes, la bielle supérieure (14) possédant une longueur plus grande, de préférence de plus du double, que la bielle inférieure (14).

8. Machine de travail du sol selon l'une quelconque des revendications précédentes, la bielle supérieure (14) s'étendant au-delà du sous-groupe de travail du sol (2) et/ou étant articulée sur un support porté (8), au moyen duquel le sous-groupe de travail du sol (2) peut être monté sur le tracteur.

9. Machine de travail du sol selon l'une quelconque des revendications précédentes, le châssis (6) du sous-groupe de travail du sol (2) comprenant un rouleau, notamment un rouleau à roues (7), qui est disposé en aval d'outils de travail du sol du sous-groupe de travail du sol (2).

10. Machine de travail du sol selon l'une quelconque des revendications précédentes, l'appareil d'accouplement (9) étant disposé en aval du sous-groupe de travail du sol (2) et formant un appareil de semi-portage pouvant être semi-porté sur le sous-groupe de travail du sol (2).
